# EUROPÄISCHE PATENTANMELDUNG

(11) **EP 4 450 714 A1**
(43) Veröffentlichungstag der Anmeldung: **23.10.2024**
(21) Anmeldenummer: 24166001.8
(22) Anmeldetag: 25.03.2024
(51) Int. Cl.: E02D 5/52

(54) **PFAHLKUPPLUNG ZUM ZUSAMMENFÜGEN VON MEHREREN TEILELEMENTEN ZU PFÄHLEN**

(30) Priorität: 20.04.2023 DE 102023110121
(71) Anmelder: Krinner Innovation GmbH, 94342 Strasskirchen (DE)
(72) Erfinder: THURNER, Günther, 94342 Straßkirchen (DE)
(74) Vertreter: Leske, Thomas

(57) **Zusammenfassung**

Es wird eine Pfahlkupplung 1 zum Zusammenfügen von Pfählen 3 aus mehreren Teilelementen 2 beschrieben, welche zumindest ein Teilelement 2 mit einer um dessen Mantelfläche 4 schraubenförmig ausgebildeten Wendel 5 und weitere hülsenartige Teilelemente 2 zur Verlängerung der Pfähle 3 aufweist. Die Teilelemente 2 sind mittels der Kupplung 1 miteinander verbindbar und miteinander mittels Durchsteckbolzen 6 über dafür vorgesehene Bohrungen 7.1, 7.2 kuppelbar, wobei zumindest jeweils zwei Bohrungen 7.1, 7.2 in einem Verbindungsbereich der Teilelemente 2 vorgesehen sind. Die Bohrungen 7.1, 7.2 sind bezüglich ihres Durchmessers derart größer als die der Durchsteckbolzen 6, dass dieser selbst bei teilweise nicht zueinander ausgerichteten Bohrungen 7.1, 7.2 zu verbindender Teilelemente 2 in die Bohrungen 7.1, 7.2 einführbar ist. Der Durchsteckbolzen 6 weist an zumindest einem seiner Enden ein lösbares Schaftelement 8 mit Flachkopf 8.1 und mit einem im montierten Zustand die Bohrungen 7.1, 7.2 der zu verbindenden Teilelemente 2 durchgreifenden Schaftabschnitt 8.2 auf. Das Schaftelement 8 weist neben dem Schaftabschnitt 8.2 eine Führungsfase 8.4 zum Zueinander-Ausrichten der jeweiligen Bohrungen 7.1, 7.2 der miteinander zu verbindenden Teilelemente 2 auf, dessen Außendurchmesser das 1,1- bis 1,5-fache des Durchmessers des Gewindes des Durchsteckbolzens 6 beträgt und welcher im Sinne einer Spielpassung kleiner ist als der Durchmesser der Bohrungen 7.1, 7.2.

## Beschreibung

Die Erfindung betrifft eine Pfahlkupplung zum Zusammenfügen von mehreren Teilelementen zu Pfählen.

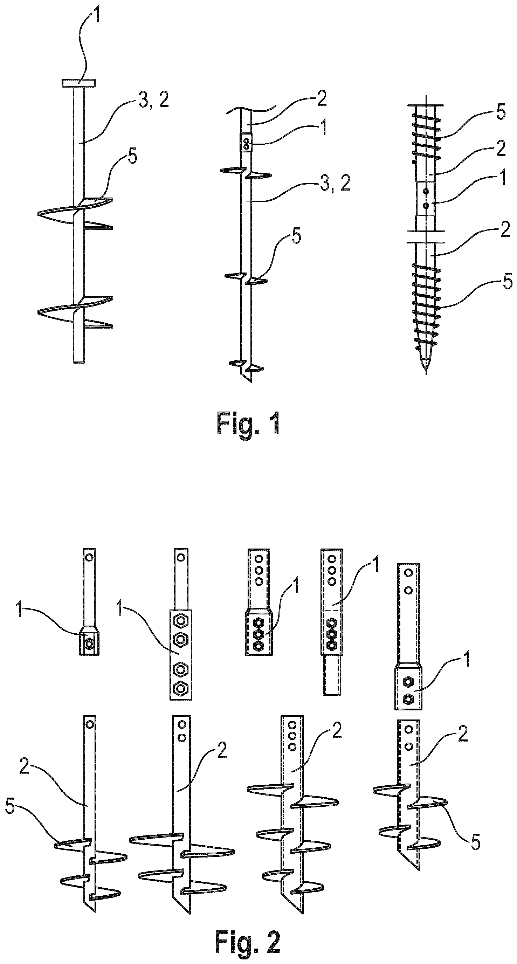

Diese Pfähle werden im Spezialtiefbau eingesetzt und erfordern daher die Möglichkeit, diese beliebig zu verlängern. Diese Pfähle sind in der Regel als Schraubfundamente ausgebildet, d. h. zumindest ein Teilelement - in der Regel das beim Einbringen in einen Bodenbereich unterste bzw. vorderste Teilelement - weist tellerartige Gewindeabschnitte auf, die entweder aus einem durchlaufenden Gewindeabschnitt oder aus mehreren voneinander beabstandeten tellerförmigen Wendeln bestehen. Diese Wendeln können unterschiedlich im Durchmesser sein, wobei die Wahl des Durchmessers der Wendel von der jeweiligen Bodenform, in welcher die Schraubfundamente eingebracht werden, abhängen (siehe Figur 1, linke und mittlere Abbildung). Ein zweiter Typ eines derartigen Schraubfundamentes mit Verlängerungsmöglichkeit und Einsatz im Spezialtiefbau weist einen etwas flachen Gewindegang auf, welcher sich über größere Teilabschnitte des Fundamentes erstreckt. Dabei können derartige Gewindegänge an dem beim Einschrauben untersten bzw. vorlaufenden Teilelement angebracht sein; es ist aber auch möglich, dass an zusammengefügten Teilelementen jeweils derartige Teilabschnitte eines durch eine flache Wendel gebildeten Gewindeganges angeordnet sind (siehe Figur 1, rechte Abbildung).

Um für den Spezialtiefbau sehr lange und damit tief in den Boden reichende Schraubfundamente zu schaffen, werden die aus mehreren Teilelementen bestehenden Schraubfundamente mittels einer Pfahlkupplung zu einem Pfahl zusammengefügt. Beispielshaft sind verschiedene Arten von Pfahlkupplungen, d. h. des Zusammenfügens von Teilelementen zu einem längeren Pfahl, in Figur 2 gezeigt.

Es ist bekannt, Teilelemente eines Pfahles an den einander zugewandten jeweiligen Endabschnitten, in welchen eine Bohrung oder mehrere Bohrungen vorhanden sind, miteinander zu verbinden, sodass nach einem Ineinanderstecken beider Teilelemente Bolzen durch die jeweiligen Bohrungen gesteckt und an der Kupplungsstelle verschraubt werden können. Nachteilig dabei ist, dass an der Kupplungsstelle die Elemente einen unterschiedlichen Durchmesser aufweisen müssen, damit sie übereinander gesteckt werden können. Wenn Bolzen durch die Bohrungen gesteckt und verschraubt werden, dann ist es zwar möglich, die Pfähle beliebig zu verlängern, die Muttern oder Bolzenköpfe stehen aber recht weit über den Umfang hinaus, was beim Einbringen der Pfähle in den Boden wegen zusätzlich auftretender Reibung Probleme verursachen kann.

Des Weiteren sind die Maßtoleranzen für im Tiefbau eingesetzte Elemente nicht besonders hoch. Die Bohrungen werden in der Regel größer als der Durchmesser der durchzusteckenden Bolzen gefertigt, zumal beim Übereinanderstecken von Teilelementen die Bohrlöcher nicht immer fluchten. Die Montage derartiger Pfähle gestaltet sich daher in der Regel schwierig, da der Bolzen nicht immer leicht hindurchgesteckt werden kann. Wenn die Bohrungen nicht fluchten, müssen entweder die Teilelemente zueinander bewegt werden, oder es muss mittels eines Hammers beispielsweise ein Bolzen in die Öffnungen hinein und durch diese geschlagen werden. Dies verletzt das Gewinde, was ein späteres Aufschrauben von Befestigungsmuttern erschwert. Die Bolzen können dabei einen festen Schraubenkopf haben; es ist aber auch möglich, dass die Bolzen reine Gewindebolzen sind und beidseitig nach dem Hindurchstecken durch die Bohrlöcher an beiden äußeren Seiten mittels Muttern verschraubt werden. Sobald der Bolzen in den Bohrlöchern ist, werden die Bohrlöcher zumindest teilweise zueinander ausgerichtet, sodass anschließend ein Verschrauben erfolgen kann.

Aufgrund des relativ großen Spieles zwischen dem Bolzen und den Bohrungen besteht die Gefahr, dass sich die Pfähle beim Einbringen, d. h. wenn Kraft in Längsrichtung der Pfähle zu deren Einbringen in den Boden ausgeübt wird, setzen, selbst wenn die Muttern auf dem durchgesteckten Bolzen fest verschraubt sind. Durch diese Beweglichkeit der einzelnen Teilelemente zueinander, insbesondere beim Einbringen, besteht die Möglichkeit, dass die Pfähle selbst beim Nichtvorhandensein von Steinen und größeren Gegenständen im Boden aus der Einschraubrichtung herauslaufen und letztlich schief im Boden angeordnet werden.

Die Aufgabe der Erfindung besteht nun darin, dass die mehreren Teilelemente, welche zu Pfählen zusammengefügt werden, mittels Pfahlkupplungen derart zusammengefügt werden, dass eine Montage der Bolzen in die Bohrungen der Kupplung erleichtert wird, dass nach zusammengefügten Teilelementen beim Einbringen das Setzen ebenfalls verringert oder sogar verhindert wird und dass bei der Montage das Gewinde auf dem Bolzen möglichst nicht beschädigt wird. Außerdem soll das Zusammenfügen der Teilelemente mittels der Pfahlkupplung erleichtert und rascher ausgeführt werden können.

Diese Aufgabe wird mit einer Pfahlkupplung zum Zusammenfügen von aus mehreren Teilelementen bestehenden Pfählen mit den Merkmalen gemäß Anspruch 1 gelöst. Zweckmäßige Weiterbildungen sind in den abhängigen Ansprüchen definiert.

Gemäß der Erfindung weist eine Pfahlkupplung zum Zusammenfügen von mehreren hülsenartigen Teilelementen zu einem beliebig lang ausgebildeten Pfahl eine derartige Ausbildung auf, dass die Teilelemente, von denen zumindest eines um seine Mantelfläche zumindest eine schraubenförmig ausgebildete Wendel aufweist. Die Teilelemente werden mittels der Kupplung verbunden und miteinander mittels Durchsteckbolzen über dafür in den jeweiligen einander zugewandten Endabschnitten der Teilelemente vorgesehene Bohrungen koppelbar. Dabei sind zumindest jeweils zwei Bohrungen in einem Verbindungsbereich der Teilelemente vorgesehen, deren Durchmesser derart größer als der der Durchsteckbolzen ist, dass diese selbst bei teilweise nicht zueinander ausgerichteten Bohrungen von zu verbindenden Teilelementen immer noch in die Bohrungen mit relativ geringem Kraftaufwand einführbar sind, sodass das Außengewinde des Bolzens keine oder allenfalls eine nur geringe Beschädigung beim Einführen erfährt. Einerseits soll also der Durchmesser der Bolzen möglichst gering sein im Vergleich zu dem Durchmesser der Bohrungen, durch welche der Bolzen zu stecken ist, um die einzelnen Teilelemente miteinander zu verbinden. Zum anderen ist die Belastung von Bolzen geringeren Durchmessers umso geringer, je geringer dessen Durchmesser ist. Außerdem bedeutet ein Bolzen geringeren Durchmessers, d. h. deutlich geringeren Durchmessers gegenüber den Bohrungen, dass nach erfolgter Verschraubung und damit Kupplung von Teilelementen miteinander beim Einbringen und Aufbringen von Einbringkräften in axialer Richtung der Pfähle das zuvor beschriebene Setzen des Pfahles eintritt, was unerwünscht ist und wodurch ein sicheres Einbringen der Pfähle nach Möglichkeit in genau die vorgesehene axiale Richtung in den Boden nicht eingehalten werden kann.

Hier setzt nun die Erfindung an. Zunächst versteht sich, dass der Durchmesser des Bolzens eine der Belastung entsprechende Mindestabmessung hinsichtlich seines Durchmessers haben muss, aber auf jeden Fall so dimensioniert ist, dass er leicht in den Bohrungen montiert werden kann, sodass auch bei unvollkommenem Ausrichten der zu verbindenden Teilelemente zueinander, d. h. selbst bei nicht miteinander fluchtenden Bohrungen, der Bolzen leicht eingeführt werden kann. Ein Ausrichten der Teilelemente zueinander wird dadurch mit dem Bolzen allerdings nicht erreicht.

Gemäß der Erfindung wird der Durchsteckbolzen an zumindest einem seiner Enden mit einem lösbaren Schaftelement mit einem Flachkopf versehen. Des Weiteren weist das lösbare Schaftelement einen vorzugsweise zylindrischen Schaftabschnitt auf, welcher eine axiale Länge aufweist, die in der Regel größer ist als die Wanddicke zweier zu verbindender Teilelemente, sofern diese ineinandergesteckt werden oder - im anderen Fall - wenn die Pfahlkupplung über die Teilelementendbereiche oder in diese gesteckt wird. In jedem Fall ist die mindestens doppelte Wandstärke von dem Schaftabschnitt durchgriffen. Der Durchmesser des Schaftabschnittes des Schaftelementes ist nun um so viel größer als der Durchmesser des Bolzens, d. h. der Durchmesser des Außengewindes des Durchsteckbolzens, dass beim Aufschrauben des Schaftelementes mit seinem zum Durchsteckbolzen passenden Gewinde der Schaft sich in die möglicherweise nicht korrekt zueinander ausgerichteten Bohrungen hineinzieht und damit die Teilelemente zueinander ausgerichtet werden, und zwar ohne dass die Bohrung das Außengewinde des Bolzens in irgendeiner Weise beschädigen kann. Da die Eingriffslänge des Gewindes einer derartigen Schaftmutter deutlich länger ist als bei einer normalen Mutter, wird vermieden, dass das Außengewinde des Bolzens während der Montage beschädigt wird. Damit das Schaftelement mit seinem die zu verbindenden Teilelemente durchgreifenden Schaftabschnitt sich in die Bohrungen hineinzieht, weist der Schaftabschnitt mit deutlich größerem Durchmesser als der des Durchsteckbolzens eine Führungsfase, mit welcher die jeweiligen Bohrungen der miteinander zu verbindenden Teilelemente zueinander ausgerichtet werden, und einen zylindrischen Abschnitt auf, dessen Außendurchmesser deutlich größer ist als der Durchmesser des Gewindes des Durchsteckbolzens, welcher aber dennoch im Sinne einer guten Montierbarkeit vorzugsweise eine kleine Spielpassung aufweist zu den Bohrungen in den Teilelementen. Je geringer das Spiel gestaltet werden kann, umso geringer ist letztlich auch beim Anwenden von Kraft beim Einbringen eines Pfahles, der aus mehreren Teilelementen montiert worden ist, ein Setzen nur noch möglich. Gemäß der Erfindung wird hier unter Passung verstanden, dass dies eine Spielpassung, eine Übergangspassung oder auch eine Presspassung sein kann. Es versteht sich, dass für eine Übergangspassung wie auch eine Presspassung die Fertigungstoleranzen und damit auch die Kosten höher sind als bei einer Spielpassung. Es versteht sich auch, dass bei einer Spielpassung die Montage des Durchsteckbolzens in der Regel umso einfacher möglich ist, je größer das Spiel ausgelegt ist. Eine Spielpassung ist dadurch gekennzeichnet, dass unter Beachtung aller Fertigungstoleranzen stets zwischen den miteinander zu verbindenden Teilen ein Spiel gewährleistet ist. Das bedeutet, es ist immer ein Spiel zwischen Bolzen und Bohrung vorhanden. Bei einer Übergangspassung kann sowohl eine Spielpassung als auch eine Presspassung von den Fertigungstoleranzen der zu fügenden Bauelemente Bolzen und Bohrung vorhanden sein. Bei einer Presspassung dagegen, ist eine Spielpassung ausgeschlossen, weshalb der Durchmesser des Bolzens stets größer als der der Bohrung ist. Die Fertigung wird für die erfindungsgemäße Pfahlkupplung nun so vorgenommen, dass alle drei Passungsarten letztlich möglich sind, die Toleranzbereiche aber in Größenordnungen sind, dass ein Fügen mit beherrschbarem Aufwand stets möglich ist. Bei den meisten angewendeten Pfahlkupplungen wird vorzugsweise eine Spielpassung zwischen den zu fügenden Elementen Bolzen und Bohrung angewendet. Um jedoch bei dem späteren Einbringen eines aus mehreren Teilelementen bestehenden Pfahles das Setzen so gering wie möglich zu halten, muss darauf geachtet werden, dass das Spiel zwischen Bolzen und Bohrung möglichst relativ gering ausfällt. Bei einer Übergangspassung mit Toleranzen im Bereich einer Presspassung wie auch bei einer Presspassung ist ein Montieren des Bolzens in den Bohrungen selbstverständlich immer noch mit vertretbarem Aufwand möglich. Die Herstellungskosten richten sich nach der eingesetzten Technologie und sind dementsprechend relativ moderat. Der Vorteil einer Presspassung für eine Pfahlkupplung bzw. einen aus mehreren Teilelementen bestehenden Pfahl beim Eindringen beispielsweise in Erdreich besteht darin, dass ein Setzen nicht mehr oder allenfalls bei einer sehr geringen Presspassung im Bereich geringer plastischer Verformung nur noch sehr gering auftitt.

Es ist also nicht mehr wie im Stand der Technik der Bolzen, der die Größe des Setzens des Pfahles beim Einbringen und Belasten mit Einbringkräften definiert, sondern es ist der gegenüber dem Durchmesser des Bolzens deutlich größere Außendurchmesser des Schaftabschnittes des Schaftelementes. Erfindungsgemäß ist daher der Außendurchmesser des Schaftabschnittes so gewählt, dass er das 1,1- bis 1,5-fache des Durchmessers des Außengewindes des Durchsteckbolzens aufweist. Die Pfahlkupplung mit dem erfindungsgemäßen Schaftelement ermöglicht aufgrund des die Wandungen der zueinander montierten Teilelemente durchgreifenden zylindrischen Schaftabschnittes die Ausbildung eines flachen Schraubenkopfes, welcher sich viel stärker an die Außenkontur bzw. den Außenmantel des Teilelementes oder des Kupplungselementes anschmiegt, somit weniger über die Mantelfläche hinaus vorsteht, als das bei herkömmlichen Schrauben standardisierter Dicke der Fall ist. Beim Eindrehen des Pfahles bringen die Schaftelemente mit ihrem Flachkopf nur eine deutlich geringere Reibung auf als bei größerem Überstand der Mutter gegenüber der Mantelfläche der Teilelemente. Die Länge des Bolzens wird nun in der Regel so gewählt, dass der Flachkopf im Wesentlichen bündig mit der Stirnseite des Bolzens ist, d. h. allenfalls unwesentlich über die Dicke des Flachkopfes des Schaftelementes hervorsteht.

Mit dieser erfindungsgemäßen Gestaltung ist nun zum einen eine viel leichtere Montage möglich, wobei darüber hinaus ein viel geringeres Spiel und eine viel geringere Setzbewegung obendrein möglich sind. Bei den bekannten Kupplungen muss eine leichte Montage mit einem relativ dünnen Durchsteckbolzen - dünn gegenüber den Bohrungen in den Teilelementen - mit einem stärkeren Setzen erkauft werden, weil mit dünnerem Durchsteckbolzen ein deutlich größeres Spiel beim Einbringen des Pfahles in den Boden vorhanden ist.

Die Erfindung bringt nun weitere wesentliche Vorteile mit sich, wie beispielsweise, dass mehr Gewindegänge im Eingriff sind als bei einer herkömmlichen Mutter, dass der Überstand der Mutter durch die Ausbildung als Flachkopf gegenüber der Außenoberfläche der Teilelemente geringer ist, dass die Montage erleichtert wird, d. h. der Bolzen leicht eingeführt werden kann, und dann die Schaftabschnitte mit einem gegenüber dem Bolzen deutlich größeren Durchmesser nicht nur das Spiel in den Bohrungen verringern, sondern auch ein Ausrichten der Bohrungen gewährleisten und selbst bei einem Durchsteckbolzen geringen Durchmessers ein nur sehr geringes Spiel und damit ein sehr geringes Setzen des Pfahles beim Einschrauben erreicht werden kann. Hinsichtlich der Beschädigung des Gewindeganges beim Montieren von bekannten Pfählen ist festzustellen, dass der erfindungsgemäße Pfahl mit der erfindungsgemäßen Pfahlkupplung dafür sorgt, dass der Gewindegang des Durchsteckbolzens nicht mehr in der Lochleibung Kontakt hat, sondern lediglich sozusagen von dem Schaftabschnitt des Schaftelementes über den dadurch stark verlängerten Gewindebereich in der Leibung sogar geschützt ist und obendrein ein besseres Ausrichten und vermindertes Setzen der Teilelemente zueinander gewährleistet.

Vorzugsweise weist der Durchsteckbolzen, welcher als Gewindebolzen ausgebildet ist, dessen Gewinde sich über die gesamte Länge erstreckt, beidseitig, d. h. im montierten Zustand, das jeweilige als Schaftmutter ausgebildete Schaftelement auf. Das bedeutet, dass der Bolzen geringeren Durchmessers durch die Bohrungen gesteckt wird bei der Montage und auf seinen beiden Seiten jeweils ein Schaftelement aufgeschraubt wird, das mit dem Aufschrauben mit seiner jeweiligen Führungsfase in die Bohrungen eingreift und mit dem anschließenden zylindrischen Abschnitt in der gewünschten Lage, abgesehen vom geringen Spiel zentriert. Dabei wird das Außengewinde des Durchsteckbolzens vor einem Kontakt mit der Bohrungsleibung geschützt, da diesen Kontakt das Schaftelement übernimmt, und zwar mit dem Teil der Führungsfase beim Einführen und mit dem zylindrischen Abschnitt. Am Flachkopf kann mit einer Schraubeinrichtung das Schaftelement so festgezogen werden, dass die zu verbindenden Teilelemente fest miteinander verbunden sind, ohne dass der Flachkopf weit über den Außenumfang im Pfahlkupplungsbereich übersteht.

Gemäß einer Weiterbildung ist der Durchsteckbolzen so ausgebildet, dass er an einem seiner Enden schaftmutterartig ausgebildet ist, d. h. ein unlösbares, schaftmutterartiges Schaftelement aufweist, das Teil des Bolzens ist, und an seinem anderen Ende eine lösbare Schaftmutter aufweist. Das fest mit dem Bolzen verbundene Schaftelement führt dabei beim Einstecken dieselbe Funktion aus wie zuvor geschrieben, nämlich ein Einführen in die Bohrungen der zu verbindenden Teilelemente mit der Führungsfase und ein Ausrichten der Bohrungen zueinander der beiden miteinander zu verbindenden Teilelemente mit dem zylindrischen Teil des Schaftelementes.

Gemäß einer Weiterbildung weist der Durchsteckbolzen an seinem Ende, an dem ein schaftmutterartiges Schaftelement unlösbar als fester Bestandteil des Bolzens vorgesehen ist, in dessen zylindrischem Teil des Schaftes, welcher in die Bohrungsleibung eingreift, zusätzlich eine axial sich erstreckende, die Bohrungsleibung gegebenenfalls plastisch verformende und dabei auch ein Drehmoment aufnehmende Riffelung auf. Diese sich im zylindrischen Bereich und gegebenenfalls auch teilweise im Bereich der Führungsfase erstreckenden axial ausgerichteten Riffelungen können dazu beitragen, dass das Spiel zwischen den zu verbindenden Teilelementen und damit das Setzen beim Einbringen des Pfahles in den Boden verringert wird, weil bei der Montage durch die Riffelung ein geringes plastisches Deformieren in Kauf genommen werden kann, sodass das ansonsten vorhandene Spiel weiter reduziert oder vermieden werden kann.

Vorzugsweise ist die Pfahlkupplung so ausgebildet, dass die Durchsteckbolzen hinsichtlich ihrer Längsachse parallel zueinander die zu verbindenden Teilelemente durchdringen. Dies können dabei zwei oder drei oder mehr Bohrungen für jeweilige Durchsteckbolzen sein. Gemäß einer Weiterbildung ist vorgesehen, dass die Durchsteckbolzen überkreuz zueinander hinsichtlich ihrer Längsachse die zu verbindenden Teilelemente durchdringen. Die grundsätzliche Funktion sowohl der Durchsteckbolzen allein als auch in Kombination mit dem Schaftelement gemäß der Erfindung werden bei einer Anordnung überkreuz noch verbessert, weil dadurch ein gegebenenfalls vorhandenes geringes Spiel nach erfolgter Montage in zwei Richtungen des Pfahles seitlich zu dessen Längsachse durch die Kupplung sozusagen im Wesentlichen blockiert ist.

Des Weiteren ist die Pfahlkupplung gemäß der Erfindung bzw. der Pfahl mit einer erfindungsgemäßen Pfahlkupplung so ausgebildet, dass die Teilelemente, welche zu einem Pfahl zusammengefügt sind, im Querschnitt zylindrisch oder vieleckig ausgebildet sind. Dadurch wird ein Freiheitsgrad eines montierten Pfahles im Sinne einer Verdrehung zur Längsachse des Pfahles weitestgehend unterbunden.

Gemäß einer Weiterbildung ist das Schaftelement, dessen Gewindebereich, d.h. dessen Innengewinde mit dem Schaft, länger ist als die durch das Übereinander-Anordnen zweier Teilelemente gebildete Gesamtwandstärke, mit einem gewölbten Flachkopf ausgebildet, welcher sich an die Mantelfläche außen anschmiegt und im zentralen Bereich eine Ausnehmung beispielsweise für einen Steckschlüssel aufweist. Insbesondere ist ein gewölbter Flachkopf von Vorteil für den fest mit dem Bolzen verbundenen Teil mit der zuvor beschriebenen Riffelung. Es ist jedoch auch möglich, dass ein derartiger Kopf für das eigentliche Schaftelement anstelle des als Sechskantmutter beispielsweise ausgebildeten Flachkopfes vorgesehen ist. Die Ausbildung des Kopfes kann selbstverständlich auch davon abweichen; er muss lediglich so ausgebildet sein, dass für das aufschraubbare Schaftelement eine Einrichtung zum Schrauben anbringbar ist, was auch mit einem Flachkopf mit einer Innenausnehmung für einen entsprechend geformten Steckschlüssel möglich ist. Ein wesentlicher Vorteil des gewölbten Kopfes bzw. bereits des Flachkopfes besteht darin, dass dieser geringer von der Mantelfläche des verbundenen Teilelementes des Pfahles übersteht, als dies bei normalen Sechskantmuttern der Fall ist.

Gemäß einer Weiterbildung der Erfindung sind die Teilelemente mit im Wesentlichen konstantem Durchmesser ausgebildet und ein separates Kupplungsteil nimmt beidseitig ein jeweiliges Teilelement auf, d. h. ist auf die Teilelemente bezüglich seiner Abmessungen aufsteckbar und weist im Steckbereich jeweils eine, zwei oder auch mehrere Bohrungen zum Verbinden des separaten Kupplungsteiles mit den jeweils benachbart dazu angeordneten Teilelementen auf.

Gemäß noch einer Weiterbildung ist es auch möglich, dass die Teilelemente an zumindest einer Seite eine Durchmesseraufweitung aufweisen, welche so ausgeführt ist, dass ein Teilelement ohne eine derartige Aufweitung einsteckbar ist und im eingesteckten Überlappungsbereich beider Teilelemente die entsprechenden Bohrungen für die Kupplung der Teilelemente, d. h. für die Durchsteckbolzen und die Muttern oder entsprechenden Köpfe, zueinander verschoben sind. Eine separate Kupplung, die auf die jeweiligen benachbarten Teilelemente aufsteckbar ist, und diese dann miteinander verbindet, hat den Vorteil, dass die Teilelemente relativ einfach aus einem entsprechenden Rohquerschnitt ohne Aufweitungen gefertigt werden können, wohingegen beim Ineinanderstecken von Teilelementen dadurch, dass zumindest an einer Seite das entsprechende Teilelement aufgeweitet ist, sodass es ein nicht-aufgeweitetes Teilelemente aufnehmen kann, zwar einen höheren Fertigungsaufwand für die Teilelemente bedeutet, aber ein separates Kupplungsteil dafür nicht vorgesehen ist. Die Durchsteckbolzen und die mit den Durchsteckbolzen verbundenen Schaftelemente sind dann jeweils in der zuvor beschriebenen Ausführungsart einsetzbar.

Weitere Vorteile, Merkmale und Ausführungsmöglichkeiten der vorliegenden Erfindung werden nun anhand von Ausführungsbeispielen in der Zeichnung näher erläutert. In der Zeichnung zeigen:
- Figur 1: zwei Arten von Schraubfundamenten gemäß Stand der Technik für Pfähle für Spezialtiefbau mit schraubenförmig angeordneten einzelnen Wendeln mit größerem und kleinerem Durchmesser und für schraubenförmig über einen längeren Bereich eines Teilelementes umlaufende Wendeln;
- Figur 2: schraubenförmig umlaufende einzelne Wendeln an Teilelementen mit unterschiedlichen Varianten von Pfahlkupplungen zur Verbindung mit weiteren Teilelementen gemäß dem Stand der Technik;
- Figur 3: eine separate Pfahlkupplung gemäß dem Stand der Technik zur Verbindung von Teilelementen mit achteckigem Querschnitt zur Verbindung mit Gewindebolzen und überstehenden Sechskantmuttern sowie einem Bolzen mit Sechskantkopf und einer Sechskantmutter;
- Figur 4: eine Pfahlkupplung gemäß der Erfindung mit im Querschnitt achteckig ausgebildeten Teilelementen analog der bekannten Ausbildung gemäß Figur 3, jedoch mit erfindungsgemäßem Schaftelement und mit Durchsteckbolzen mit deutlich geringerem Durchmesser;
- Figur 5a), b), c): in prinzipieller Darstellung eine erfindungsgemäße Pfahlkupplung zur Verbindung von Teilelementen zu Pfählen mit einem Durchsteckbolzen mit relativ geringem Durchmesser und einem Schaftelement in Gegenüberstellung zu einem Bolzen etwas größeren Durchmessers;
- Figur 6a), b), c): eine Pfahlkupplung gemäß einem weiteren Ausführungsbeispiel mit kreisförmigem Querschnitt der zusammenzukoppelnden Teilelemente und der Pfahlkupplung gemäß der Erfindung (6a), 6b)) und zum Vergleich gemäß dem Stand der Technik mit deutlich größerem Überstand der Sechskantmutter über den Mantel der Teilelemente (6c));
- Figur 7: ein weiteres Ausführungsbeispiel in vergrößerter Darstellung gemäß Figur 4, jedoch mit einem Bolzen mit einseitig fest mit diesem verbundenen, schaftelementartigen Kopf und an der gegenüberliegenden Seite mit einer schaftelementartigen Mutter mit Flachkopf;
- Figur 8: ein weiteres Ausführungsbeispiel der vorliegenden Erfindung mit einer Pfahlkupplung für rohrförmig ausgebildete Teilelemente und mit kreuzförmig die Teilelemente durchdringenden Durchsteckbolzen;
- Figur 9: zwei Durchsteckbolzen mit Ausführung mit einseitig angeordneter schaftelementartiger Mutter und festem Bolzenkopf (obere Darstellung) und mit beidseitig angeordneter schaftelementartiger Mutter (untere Darstellung);
- Figur 10: schaftelementartige Muttern gemäß der Erfindung mit abgerundetem Kopf;
- Figur 11: zwei Ausführungsformen gemäß der Erfindung von Durchsteckbolzen und Schaftelement mit dünnerem und dickerem Durchsteckbolzen;
- Figur 12: ein weiteres erfindungsgemäßes Ausführungsbeispiel eines Schaftelementes mit langem zylindrischem Schaftabschnitt in Gegenüberstellung mit einem Schaftelement mit relativ kurzem zylindrischen Abschnitt und mit einem Durchsteckbolzen sowie nicht-ausgerichtete Bohrungen zur Verdeutlichung des Vorteils eines Durchsteckbolzens geringeren Durchmessers.

Figur 1 zeigt zwei grundsätzliche Typen von Pfählen für den Spezialtiefbau, insbesondere Schraubfundamente dafür gemäß dem Stand der Technik. Die linken beiden Darstellungen gemäß Figur 1 zeigen ein in Einbringrichtung vorlaufendes Teilelement 2, welches nach Verbinden mehrerer Teilelemente 2 einen Pfahl 3 ergibt. Die dargestellten vorlaufenden Teilelemente 2 weisen wendelförmig am Umfang des Teilelementes 2 angeordnete tellerartige Gewindeabschnitte 5 auf, welche in einem Abstand zueinander angebracht sind und einen deutlich größeren Durchmesser als die eigentlichen Teilelemente 2 haben. Beide dargestellten Teilelemente 2 sind grundsätzlich ähnlich im Aufbau, wobei das mittlere Teil wendelförmige Abschnitte 5 mit einem geringeren Durchmesser als die des linken Teilelementes 2 aufweisen. Beide Teilelemente 2 haben an ihrem oberen Teil zur Anbringung weiterer Teilelemente jeweils eine Pfahlkupplung 1 zeichnerisch angedeutet. Am oberen Ende ist bei dem Pfahl 3 gemäß der Erfindung eine Pfahlkupplung 1 zwischen zwei Teilelementen 2 angedeutet. Diese Art von Pfählen 3 ist bekannt. Die rechte Darstellung von Figur 1 zeigt ein Schraubfundament, das eine mit einem flachen Gewindegang versehene Wendel 5 aufweist, welche über größere Teilabschnitte des Fundamentes angeordnet sind. Aus der Figur ist ersichtlich, dass ein Teilelement 2 einen solchen wendelförmigen Abschnitt 5 mit flachem Gewindegang über einen großen Teil der Länge des Teilelementes 2 zeigt, auf welchem über eine Pfahlkupplung 1 ein weiteres Teilelement 2 mit diesem zu einem Pfahl 3 verbunden ist, welches ebenfalls entlang eines längeren Umfangbereiches eine solche Wendel 5 mit flachem Gewindegang aufweist.

In Figur 2 sind Teilelemente 2 mit jeweils mehreren Abschnitten mit Wendeln 5 dargestellt, welche Teilelemente 2 Bohrungen an ihrem oberen Ende aufweisen, welche Teil der Pfahlkupplung 1 sind, um weitere Teilelemente oder eine separate Kupplung 1 anzubringen. In der Regel ist dafür an jeder Seite der miteinander zu verbindenden Teilelemente 2 eine Bohrung oder sind zwei oder drei Bohrungen vorgesehen. Es ist auch möglich, dass ein Teilelement 2 zur Befestigung mit einem voranlaufenden Teilelement 2 eine Aufweitung hat, sodass dieses Teilelement 2 auf das damit zu verbindende Teilelement 2 aufgesteckt wird, woran sich eine Verschraubung dieser beiden Teilelemente 2 zu einem Pfahl 3 anschließt. Die in Figur 2 dargestellten Möglichkeiten einer Verbindung sind allgemein bekannt. Eine Variation der Ausbildungen der Pfahlkupplungen 1 kann darin bestehen, dass die Anzahl der Bohrungen variiert wird, dass die anzuschließenden Teilelemente 2 eine Aufweitung an dem Ende, mit dem eine Kupplung 1 beziehungsweise Verbindung hergestellt werden soll, aufweist, sodass die Teilelemente 2 ineinander schiebbar und mit entsprechenden Verschraubungen arretierbar sind, oder in Kupplungen 1, welche so ausgebildet sind, dass sie die zu verbindenden Teilelemente 2 an beiden Seiten jeweils in sich aufnehmen und mittels der Bohrungen 7.1, 7.2 die entsprechende Befestigung der beiden Teilelemente 2 miteinander realisiert wird, oder dass eine Kupplung so ausgebildet ist, dass sie bezüglich ihres Durchmessers in das Innere der Teilelemente 2 einsetzbar ist und dann entsprechend mit Durchsteckbolzen 6 und Muttern verschraubbar ist.

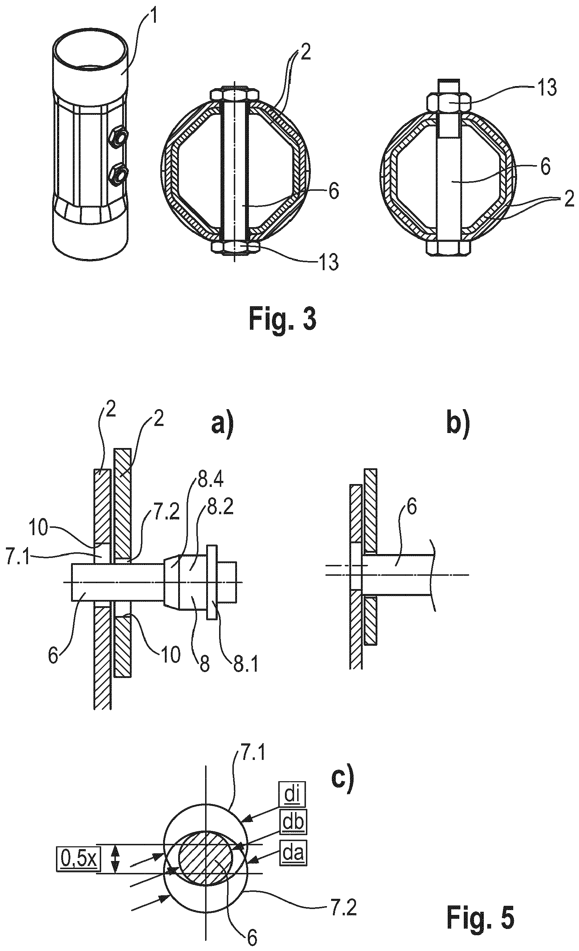

In Figur 3 ist eine Ausführung gemäß dem Stand der Technik dargestellt, bei welcher die Teilelemente 2 im Querschnitt achteckig ausgebildet sind, wobei eine Pfahlkupplung 1 über die jeweiligen Enden der zu verbindenden Teilelemente 2 geschoben werden kann, sodass die Durchsteckbolzen 6 durch die entsprechenden Bohrungen 7.1, 7.2 bei Ausrichtung der Bohrungen zueinander mittels Durchsteckbolzen 6 und Sechskantmuttern 13 an der Außenseite verschraubt und die Teilelemente 2 damit verbunden werden. Die in Figur 3 dargestellte rechte Ausführungsvariante, welche ebenfalls im Stand der Technik bekannt ist, zeigt einen Bolzen 6, welcher auf einer Seite einen festen Kopf aufweist, der als Sechskantkopf ausgebildet ist, und auf der dazu gegenüberliegenden Seite ebenfalls eine Sechskantmutter 13 auf einem Gewindeabschnitt des Durchsteckbolzens 6 angeordnet ist, mittels welcher eine Verschraubung beider zu verbindenden Teilelemente 2 erfolgt. Dies ist ebenfalls im Stand der Technik bekannt.

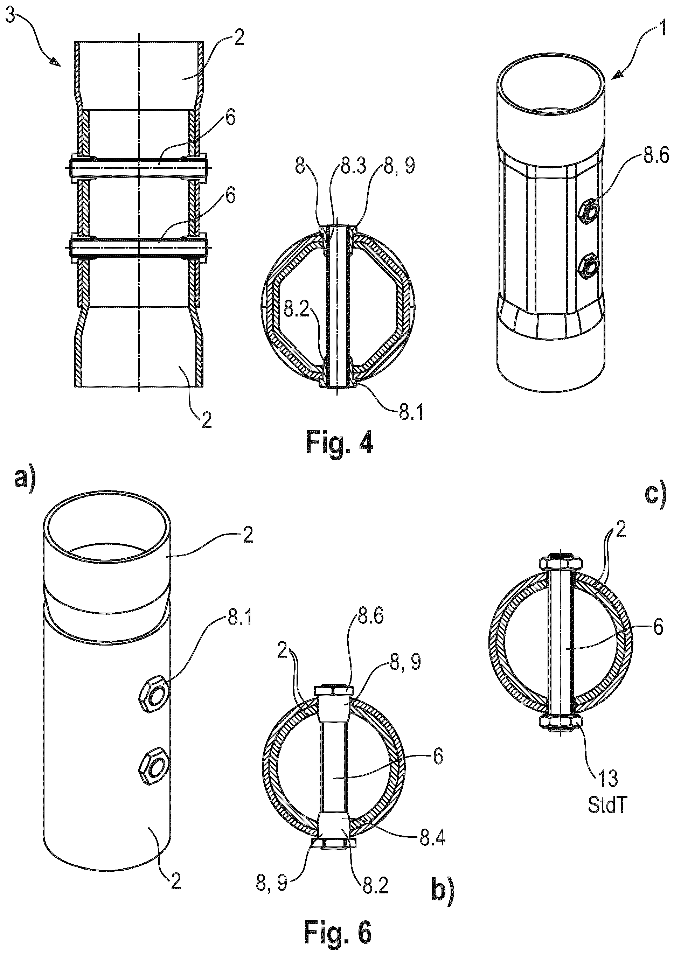

In Figur 4 ist ein Ausführungsbeispiel gemäß der Erfindung gezeigt, dass hinsichtlich der Querschnittsform die zueinander zu verbindenden Teilelemente 2 als achteckige Elemente ausgebildet sind. Dies entspricht dem Grunde nach der Ausbildung gemäß Figur 3, allerdings ist hier für die Pfahlkupplung 1 die erfindungsgemäße Verwendung des Durchsteckbolzens 6 zusammen mit Schaftelementen 8 angewendet. Es ist gezeigt, dass der Durchmesser des Durchsteckbolzens 6 ersichtlich geringer ist als der Durchmesser der die in den Bohrungen 7.1, 7.2 realisierende zylindrische Zentrierung der Schaftelemente 8. Der geringe Durchmesser des Durchsteckbolzens 6 ermöglicht ein leichtes Einführen in die Bohrungen 7.1, 7.2, selbst wenn diese beiden zueinander zu verbindenden Teilelemente 2 nicht exakt miteinander fluchten. Mittels des Schaftelementes 8, das die beiden Bohrungen 7.1, 7.2 durchgreift und diese dann auch zentriert, wird ein geringes Setzmaß realisiert und aufgrund der Verwendung eines Flachkopfes 8.1 auch ein geringer Überstand an der Kupplungsstelle. Im klargestellten Beispiel gemäß Figur 4 (linke beide Zeichnungen) ist ein Durchsteckbolzen 6 eingezeichnet, welcher an beiden Enden mit dem Schaftelement 8 versehen ist. Im Kupplungsbereich sind die Teilelemente 2 leicht eingezogen, das heißt sie weisen einen geringeren Durchmesser auf als im sonstigen Bereich des aus den Teilelementen 2 zusammengebauten Pfahles 3. Dies hat den Vorteil, dass die Flachköpfe 8.1 der jeweiligen Schaftelemente 8 nahezu nicht mehr über den effektiven Durchmesser der Teilelemente 2 in deren sonstigen Bereich überstehen. Das rechte Bild gemäß Figur 4 zeigt eine separate Pfahlkupplung 1, in welche auf jeder Seite die Enden mit den entsprechenden Bohrungen 7.1, 7.2 der Teilelemente 2 eingeschoben und in Ausrichtung mit den in der Kupplung befindlichen Bohrungen gebracht sind. Die Schaftelemente 8 weisen mit ihrem Flachkopf 8.1 einen Sechskant 8.6 auf, sodass sie an der Außenseite der Pfahlkupplung 1 das Aussehen einer flachen Sechskantmutter haben.

In Figur 5a), b), c) ist eine prinzipielle Darstellung des Funktionierens einer erfindungsgemä-ßen Pfahlkupplung gezeigt, aus der das Wesen der vorliegenden Erfindung verdeutlicht wird. Figur 5a) in Verbindung mit Figur 5c) verdeutlicht den Kern der vorliegenden Erfindung. Daraus wird ersichtlich, dass beim Verbinden zweier Teilelemente 2 deren Bohrungen 7.1 bzw. 7.2 nicht miteinander fluchten. Dadurch ist der freigegebene Querschnitt zwischen den sich teilweise überdeckenden Bohrungen 7.1, 7.2 der Teilelemente 2 stark verringert, was in Figur 5c) deutlich zu erkennen ist, dass nämlich der Durchmesser des Durchsteckbolzens 6 erheblich kleiner ist als der Durchmesser der Bohrungsleibung 10, wenn die beiden zu verbindenden Teilelemente 2 bezüglich ihrer Bohrungen 7.1, 7.2 fluchtend zueinander angeordnet wären. Gemäß der Erfindung ist nun der Durchmesser des Durchsteckbolzens 6 deutlich kleiner als der Durchmesser der Bohrungsleibung 10 an sich. Dieser große Unterschied zwischen diesen beiden Durchmessern ist bei einer bekannten Pfahlkupplung gerade nicht vorhanden. Bei einer bekannten Pfahlkupplung kann nach einer Verschraubung zweier Teilelemente 2 und bei Anwenden einer in axialer Richtung aufgebrachten Kraft zum Einbringen des Pfahles in den Boden ein Setzen auftreten, bei welchem die gewünschte Einbringrichtung nicht mehr zwingend eingehalten werden kann, sondern die vorlaufenden Teilelemente im Boden aus der vorgegebenen Richtung herauslaufen. Mit einer Pfahlkupplung gemäß der Erfindung kann dies vermieden werden, weil der Durchmesser des Durchsteckbolzens 6 vom Durchmesser des zylindrischen Zentrierbereiches der Schaftelemente 8 entkoppelt ist und Setzen dadurch weitgehend vermieden wird.

Aus Figur 5a) ist des Weiteren ersichtlich, dass auf dem Bolzen 6 ein Schaftelement 8 aufgeschraubt ist, welches einen Flachkopf 8.1, einen zylindrischen Bereich 8.2 und einen konischen Führungsbereich 8.4 aufweist. Der relativ geringe Durchmesser des Durchsteckbolzens 6 kann also leicht unter den meisten Umständen der nicht vollkommen zueinander fluchtend angeordneten bzw. ausgerichteten Bohrungen 7.1, 7.2 der Teilelemente 2 dennoch eingesteckt werden, ohne dass dies mit Kraft und Schlägen in axialer Richtung erfolgen muss, was letztlich zur Beschädigung des Gewindes an der Außenseite des Durchsteckbolzens 6 führen würde.

Das Schaftelement 8 wird nun zur Montage auf das Außengewinde des Durchsteckbolzens 6 aufgeschraubt. Wenn der Bolzen 6 voll durchgesteckt ist und das Schaftelement 8 auf das Gewinde geschraubt wird, dann greift zunächst die Führungsfase 8.4 des Schaftelementes 8 in das Innere des Teilelementes 2, welches in der Zeichnung rechts angeordnet ist, und richtet es so auf die Bohrung 7.2 dieses Teilelements 2 aus, dass der nachfolgende zylindrische Schaftabschnitt 8.2 zumindest in wesentlichem Maße den Durchsteckbolzen 6 etwa zentrisch zu der Bohrungsleibung 10 mittels des zylindrischen Abschnittes 8.2 ausrichtet, woran sich dieser Vorgang mit der Führungsfase 8.4 und dem zylindrischen Abschnitt 8.2 für das linke Teilelement 2 wiederholt. Dadurch werden beide Bohrungen 7.1, 7.2 zueinander fluchtend ausgerichtet, das Außengewinde des Durchsteckbolzens 6 kann nicht mehr an die Innenleibung der Bohrungen 7.1, 7.2 antreffen, weil der Schaftabschnitt 8.2 des Schaftelementes 8 beide Bohrungsleibungen 10 der beiden Teilelemente 2 durchgreift. Aufgrund der Tatsache, dass der Durchmesser des zylindrischen Abschnittes 8.2 des Schaftelementes 8 grö-βer, d.h. ersichtlich größer, ist als der Durchmesser des Durchsteckbolzens 6 ist die Beweglichkeit des Durchsteckbolzens 6 innerhalb der Bohrungsleibungen 10 der Teilelemente 2 sozusagen wieder kompensiert bzw. aufgehoben. Damit kann bei einer Verspannung der beiden Teilelemente 2 mittels der Pfahlkupplung 1 die Möglichkeit des Setzens beim Aufprägen von Einbringkräften auf dem Pfahl 3 stark vermindert oder sogar nahezu ausgeschlossen werden. Aufgrund der Tatsache, dass der Schaftabschnitt 8.2 des Schaftelementes 8 sich über viel mehr Gewindegänge erstreckt, als das bei einer einfachen Mutter der Fall ist, ist einerseits eine bessere Tragfähigkeit gegeben. Andererseits ist es möglich, den Kopf, welcher außen an der Außenfläche der Teilelemente 2 anliegt, als Flachkopf auszubilden, sodass der Überstand des Kopfes des Schaftelementes 8 geringer als bei einer herkömmlichen Sechskantmutter ist, sodass beim Eindrehen des Pfahles 3 in den Boden durch diesen geringen Überstand sich ergebende zusätzliche Reibung gering ausfällt.

In Figur 5b) ist dargestellt, dass bei im Durchmesser dickeren Durchsteckbolzen 6 bei Versatz der beiden Bohrungen 7.1, 7.2 der beiden Teilelemente 2 in axialer Richtung zueinander ein Einschieben nicht möglich ist. Das soll unterstreichen, dass es darauf ankommt, zur Erleichterung der Montage den Durchmesser des Bolzens 6 relativ klein zu machen, damit dieser leicht einsteckbar ist. Die Verringerung der Setzmöglichkeit und das Zentrieren des Durchsteckbolzens 6 erfolgen dann mit dem Schaftelement 8 mit Führungsfase 8.4 und mit dem zylindrischen Abschnitt 8.2.

In Figur 5c) ist gezeigt, wie vorteilhaft ein geringer Durchmesser des Durchsteckbolzens 6 bei zueinander versetzten Bohrungen 7.1, 7.2 ist. Selbst wenn der Durchmesser nur geringfügig größer ist als die Hälfte des Durchmessers der jeweiligen Bohrung 7.1, 7.2, kann bei einer starken Versetzung der Bohrungen 7.1, 7.2 der beiden Teilelemente 2 zueinander, wie es in Figur 5c) prinzipiell dargestellt ist, der Durchsteckbolzen 6 immer noch leicht eingesteckt werden. Der Freiheitsgrad des Setzens wird jedenfalls eingeschränkt, wenn die eine Zentrieraufgabe ausübenden Teile, Führungsfase 8.4 und zylindrischer Schaftabschnitt 8.2, in die Bohrungsleibungen 10 eingeführt sind.

In Figur 6a), b) und c) ist eine Ausführungsvariante gezeigt, welche dem Grunde nach der gemäß Figur 4 entspricht, wobei die Teilelemente 2 im Querschnitt kreisförmig ausgebildet sind. Als Durchsteckbolzen 6 wird ein Bolzen verwendet, auf den auf beiden Seiten ein Schaftelement 8 in Form einer sogenannten Schaftmutter 9 aufgeschraubt ist, welche die Bohrungen 7.1, 7.2 in den im Querschnitt kreisförmigen Teilelementen 2 durchgreifen und in gewisser Weise auch zentrieren. Die am Schaftelement 8 vorhandenen Sechskantmuttern 8.6 sind als Flachkopf 8.1 in Figur 6a) gezeigt. Zum Vergleich mit der erfindungsgemä-ßen Pfahlkupplung 1 ist in Figur 6c) eine Pfahlkupplung gemäß dem Stand der Technik unter Verwendung von im Querschnitt kreisförmig ausgebildeten Teilelementen 2 gezeigt, bei welcher auf jeder Seite herkömmliche Sechskantmuttern 13 eingesetzt werden, deren Dicke größer ist als die der Schaftelemente 8, welche sich gemäß dem Stand der Technik mit einem relativ großem Überstand über der Außenoberfläche des äußeren Teilelementes 2 erstrecken.

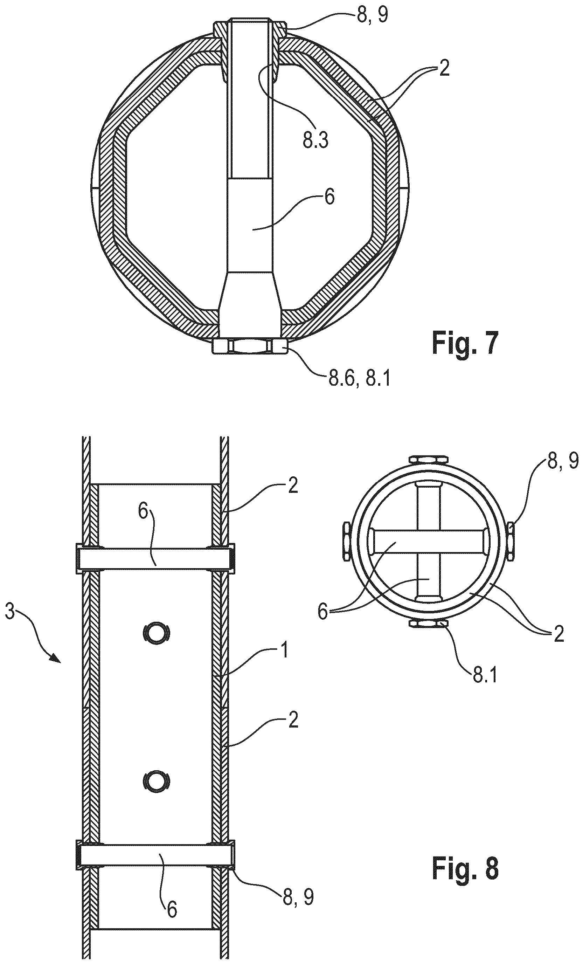

Das Ausführungsbeispiel gemäß Figur 4 ist als Modifikation in Figur 7 gezeigt. Diese Modifikation besteht darin, dass der Durchsteckbolzen 6 an einer Seite die Form eines auf dem Durchsteckbolzen 6 aufgeschraubten Schaftelementes 8, das heißt einer Schaftmutter 9 hat. In Figur 7 ist jedoch ein Sechskant 8.6 als Kopf, und zwar als Flachkopf 8.1 ausgebildet, an dessen gegenüberliegender Seite ein Schaftelement 8 in Form einer Schaftmutter 9 vorgesehen ist. Zur besseren Übertragung beispielsweise drehmomentartiger Belastungen sind die hülsenartigen Teilelemente 2 in einer achteckigen Querschnittsform ausgebildet, sodass sie formschlüssig ineinandergreifen.

Gemäß Figur 8 ist ein weiteres Ausführungsbeispiel gemäß der Erfindung gezeigt, das eine Pfahlkupplung 1 für miteinander zu verbindende Teilelemente 2 aufweist. Dabei sind je zwei Durchsteckbolzen 6 in einer Richtung senkrecht zur axialen Ausrichtung des Pfahles 3 in die Bohrungen 7.1, 7.2 hindurchgesteckt und sind so die Teilelemente 2 mit den Schaftmuttern 9 verschraubt, wobei senkrecht zu diesem Durchsteckbolzen 6, das heißt 90° zu diesen ausgerichtet, ebenfalls zwei Bolzen 6 durch die Bohrungen 7.1, 7.2 gesteckt sind. Somit sind die Durchsteckbolzen 6 kreuzartig angeordnet, was aus der Figur auf der rechten Seite zu Figur 8 ersichtlich ist, und können zu einer größeren Steifigkeit und zu einer noch besseren Übertragung der beim Eindrehen des Pfahles 3 entstehenden Torsionskräfte beitragen.

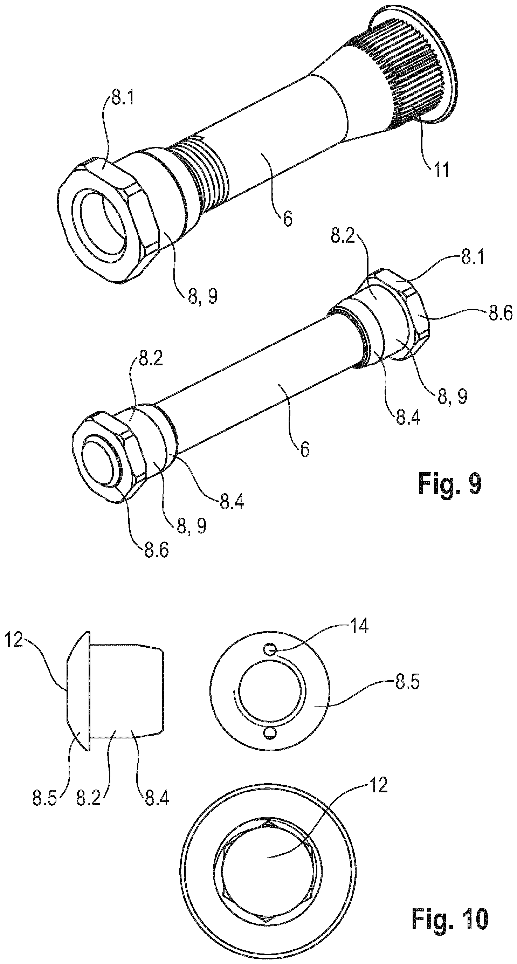

In Figur 9 sind zwei Beispiele des Durchsteckbolzens 6 mit den entsprechenden Schaftelementen 8 dargestellt. Die obere Figur zeigt einen Durchsteckbolzen 6, an dessen einer Seite ein Schaftelement 8 mit abgerundetem Flachkopf 8.1 fest mit dem Bolzen 6 verbunden angeordnet ist, wobei auf dem zylindrischen Abschnitt 8.2 eine Riffelung 11 aufgeprägt ist. Die Riffelung 11 ist dafür vorgesehen, eine noch bessere Ausrichtung der beiden Bohrungsleibungen 10 beim Durchstecken und Positionieren des Durchsteckbolzens 6 in die Bohrungen 7.1, 7.2 der beiden Teilelemente 2 zu erreichen. Auf der dazu gegenüberliegenden Seite weist der Durchsteckbolzen 6 ein Außengewinde auf, auf welches das Schaftelement 8 in Form einer Schaftmutter 9 mit Flachkopf 8.1 als Sechskant 8.6 mit einer Führungsfase 8.4 und einem zylindrischen Schaftabschnitt 8.2 aufgeschraubt ist. Nach erfolgter erleichterter Montage des Durchsteckbolzens 6 wird durch Festschrauben des als Schaftmutter 9 ausgebildeten Schaftelementes 8, was auf beiden Seiten des Bolzens 6 erfolgt, und damit verbundenen Hindurchstecken des im Durchmesser deutlich dicker ausgebildeten zylindrischen Schaftabschnittes 8.2, im Vergleich zum Durchmesser des Durchsteckbolzens 6, dieser in gewisser Weise innerhalb der Bohrungen 7.1, 7.2 in den Teilelementen 2 zentriert.

Figur 10 zeigt Ausführungsbeispiele eines Flachkopfes 8.1 am Schaftelement 8. Die linke obere Abbildung zeigt einen gewölbten Kopf 8.5 als Flachkopf 8.1 des Schaftelementes 8, welches einen zylindrischen Schaftabschnitt 8.2 und eine Führungsfase 8.4 aufweist. Der Flachkopf 8.1 des Schaftelementes 8 kann eine stirnseitige Ausnehmung 12 für einen Steckschlüssel aufweisen. Es ist aber auch möglich, wie die rechte obere Abbildung es zeigt, Bohrungen für einen Gabelschlüssel, welche konzentrisch zur Durchgangsbohrung gegenüberliegend angeordnet sind, vorzusehen, mit welchem das Schaftelement 8 insgesamt festziehbar ist. In Figur 10 unten ist die Ausnehmung 12 gezeigt, in welcher ein Sechskant 8.6 eingearbeitet ist, sodass mit beispielsweise einem Imbusschlüssel das Schaftelement 8 festziehbar ist.

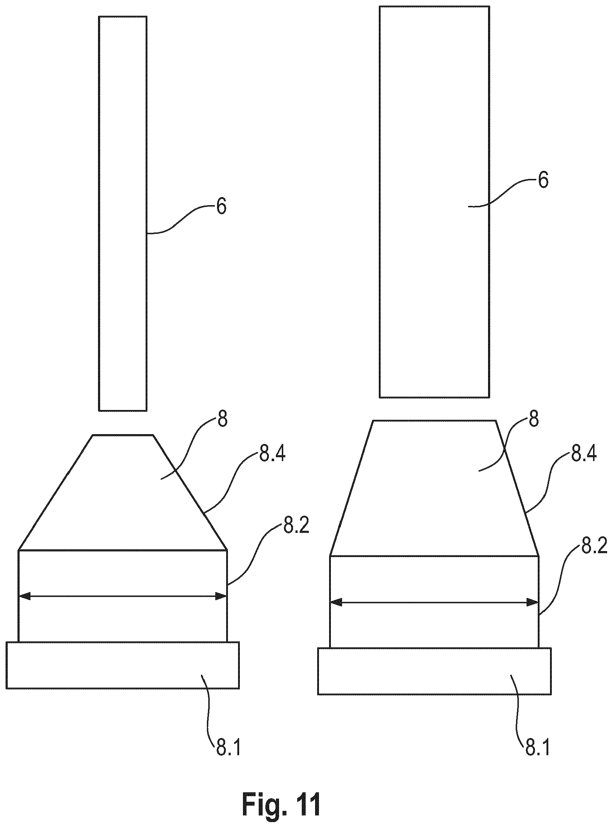

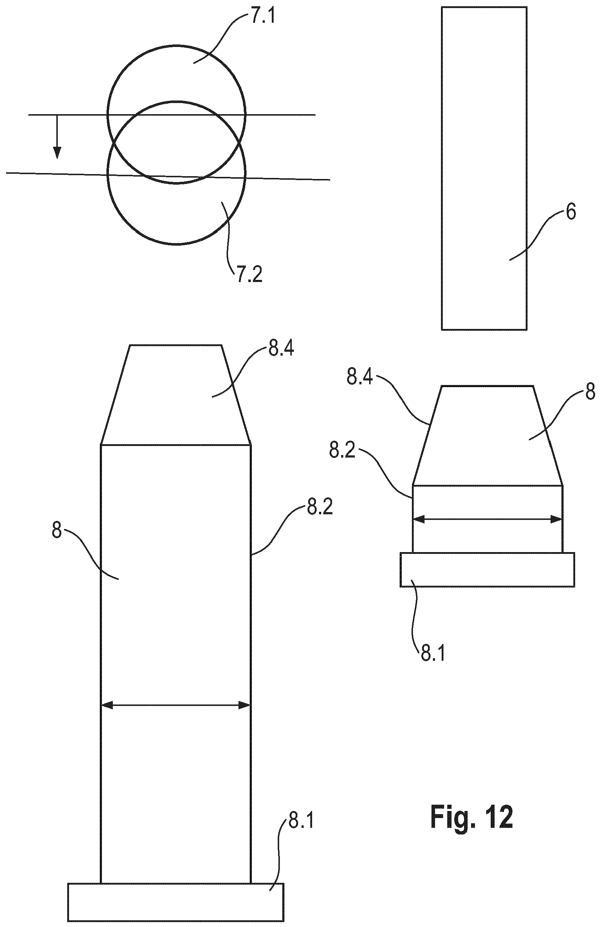

Figur 11 zeigt dem Grunde nach die Möglichkeiten mit jeweiligen Vor- und Nachteilen von einem sehr dünnen Durchsteckbolzen 6, auf welchen eine viel dickere, das heißt im Durchmesser des zylindrischen Schaftabschnittes 8.2 stärkere Abmessung im Vergleich zu der rechten Abbildung, aufschraubbar ist, im Vergleich zu einem Durchsteckbolzen 6, welcher im Durchmesser stärker ausgebildet ist, sodass das Schaftelement 8 zwar auch einen deutlich größeren Durchmesser am zylindrischen Schaftabschnitt 8.2 gegenüber dem Durchmesser des Durchsteckbolzen 6 aufweist, aber dieser Durchmesserunterschied geringer ist. Ein Durchsteckbolzen 6 mit sehr geringem Durchmesser, wie es in der linken Figur dargestellt ist, hat den Vorteil, dass selbst bei relativ starkem Versatz der beiden Bohrungen 7.1, 7.2 der Teilelemente 2 der Pfahlkupplung 1 zueinander dieser Durchsteckbolzen 6 noch leicht einführbar ist, und zwar ohne Beschädigung, dass dann aber deren Zentrierung und Ausrichtung zueinander realisiert wird, indem ein deutlich größerer Durchmesser des zylindrischen Schaftabschnittes 8.2 am Schaftelement 8 gewählt wird. Es ist letztlich der große Durchmesser des zylindrischen Schaftabschnittes 8.2, welcher zumindest was seinen Wert anbelangt, in die Nähe des Durchmessers der Bohrungen 7.1 bzw. 7.2 der Pfahlkupplung 1 reicht, wodurch selbst bei einem sehr dünnen Durchsteckbolzen 6 dessen Zentrierung erreicht wird. Dabei wird die Verspannwirkung wird über das Gewinde erreicht, wohingegen die einigermaßen zentrierte Ausrichtung in den Bohrungen 7.1, 7.2 mittels des Schaftelementes 8 und dem zylindrischen Schaftabschnitt 8.2 erreicht wird. Selbst bei relativ starkem Versatz der Bohrungen 7.1 und 7.2 zueinander (siehe Zeichnung oben links von Figur 12) wird die Führungsfase 8.4 an dem Schaftelement 8 zum Ausrichten der Bohrungen 7.1 und 7.2 beitragen. Dadurch kann der Durchsteckbolzen 6 erstrecht nicht an der Bohrungsleibung 10 anschlagen. Die Tragfähigkeit dieses dünneren Durchsteckbolzens 6 ist zwar geringer, aber die Montage bei nicht perfekt ausgerichteten Teilelementen 2 im Bereich der Pfahlkupplung 1 zueinander ist jedoch immer noch möglich und somit einfacher zu bewerkstelligen. Demgegenüber ist die etwas kompaktere Ausbildung des Durchsteckbolzens 6 in Figur 11 in der rechten Darstellung gezeigt ist. Die Grundausrichtung bleibt aber dieselbe, dass nämlich der zylindrische Schaftabschnitt 8.2 größer im Durchmesser ist, und zwar ersichtlich größer ist, als der Durchmesser des Durchsteckbolzens 6. Die Führungsfase 8.4 hat die gleiche Aufgabe, nämlich nicht zueinander ausgerichtete, miteinander nicht-fluchtende Bohrungen 7.1 und 7.2 der zu verbindenden Teilelemente 2 in die Ausrichtstellung zu verschieben. In beiden Fällen ist es möglich, einen Flachkopf 8.1 an dem Schaftelement 8 vorzusehen, sodass ein Überstand über den Außenumfang der Teilelemente 2 in allenfalls sehr eingeschränkter Form überhaupt nur vorhanden ist.

Und schließlich ist in Figur 12 nochmals verdeutlicht, welche Aufgaben die gemäß der Erfindung für die Pfahlkupplung 1 ausgebildete Schaftmutter 9 bzw. das Schaftelement 8 haben. Bei dem Ausführungsbeispiel gemäß Figur 12 ist das Schaftelement 8 als sehr langes Schaftelement ausgebildet, nimmt also im Inneren einen großen Teil des Durchsteckbolzens 6 in sich auf, sodass bei diesem Ausführungsbeispiel die Führungsfase 8.4 des Schaftelementes 8 durch die beiden dann nach dem Einführen zueinander ausgerichteten Bohrungen 7.1 und 7.2 auf dem langen zylindrischen Abschnitt 8.2 gleiten lässt und schließlich auf der gegenüberliegenden Seite die Bohrungen 7.1 und 7.2 der beiden Teilelemente 2 ebenfalls ausrichtet, sodass an dem dann durch die Bohrungen 7.1 und 7.2 ragenden Durchsteckbolzen 6 (nicht gezeigt) eine kurze Schaftmutter 9 bzw. ein kurzes Schaftelement 8, wie es auf der rechten Seite dargestellt ist, aufgeschraubt wird, sodass die Pfahlkupplung 1 entsprechend der vorstehend genannten Beschreibung ihre Funktion erfüllen kann. Somit ergibt sich eine deutlich einfachere Montage, eine raschere Montage und eine beim Einführen der Verbindungsteile weniger beschädigende Kupplung, als es im Stand der Technik der Fall ist, zumal die Kupplung mit dem Schaftelement 8 bzw. der Schaftmutter 9 erreicht, dass nach erfolgter Montage eines Pfahles 3, welcher aus mehreren Teilelementen 2 besteht, bei dessen Einbringen ein Setzen stark minimiert oder nahezu verhindert wird.

### Bezugszeichenliste

- 1: Pfahlkupplung
- 2: Teilelemente
- 3: Pfahl
- 4: Mantelfläche
- 5: Wendel
- 6: Durchsteckbolzen
- 7.1: Bohrung Verbindungsbereich
- 7.2: Bohrung Verbindungsbereich
- 8: Schaftelement
- 8.1: Flachkopf
- 8.2: zylindrischer Schaftabschnitt
- 8.3: Innengewinde
- 8.4: Führungsfase Schaftabschnitt
- 8.5: gewölbter Kopf
- 8.6: Sechskant
- 9: Schaftmutter
- 10: Bohrungsleibung
- 11: Riffelung
- 12: Ausnehmung
- 13: normale Sechskantmutter

## Patentansprüche

1. Pfahlkupplung (1) zum Zusammenfügen von aus mehreren Teilelementen (2) bestehenden Pfählen (3), welche zumindest ein Teilelement (2) mit einer um dessen Mantelfläche (4) schraubenförmig ausgebildeten Wendel (5) und weitere hülsenartige Teilelemente (2) zur Verlängerung der Pfähle (3) aufweisen, wobei die Teilelemente (2) mittels Kupplung verbindbar und miteinander mittels Durchsteckbolzen (6) über dafür vorgesehene Bohrungen (7.1, 7.2) koppelbar sind und zumindest jeweils zwei Bohrungen (7.1, 7.2) in einem Verbindungsbereich der Teilelemente (2) vorgesehen sind, deren Durchmesser derart größer als der der Durchsteckbolzen (6) ist, dass dieser selbst bei teilweise nicht zueinander ausgerichteten Bohrungen (7.1, 7.2) zu verbindender Teilelemente (2) in deren Bohrungen (7.1, 7.2) einführbar ist,
**dadurch gekennzeichnet, dass**
der Durchsteckbolzen (6) an zumindest einem seiner Enden mit einem lösbaren Schaftelement (8) mit Flachkopf (8.1) und mit im montierten Zustand die Bohrungen (7.1, 7.2) der zu verbindenden Teilelemente (2) durchgreifendem Schaftabschnitt (8.2) versehen ist, wobei der Schaftabschnitt (8.2) ein zum Gewinde des Durchsteckbolzens (6) passendes Innengewinde (8.3) und eine Führungsfase (8.4) zum Zueinander-Ausrichten der jeweiligen Bohrungen (7.1, 7.2) der miteinander zu verbindenden Teilelemente (2) und einen zylindrischen Abschnitt aufweist, dessen Außendurchmesser das 1,1- bis 1,5-fache des Durchmessers des Gewindes des Durchsteckbolzens (6) beträgt und welcher im Sinne einer Passung kleiner ist als der Durchmesser der Bohrungen (7.1, 7.2).

2. Pfahlkupplung (1) nach Anspruch 1, **dadurch gekennzeichnet, dass** die Durchsteckbolzen (6) beidseitig das jeweilige als Schaftmutter (9) ausgebildete Schaftelement (8) aufweisen.

3. Pfahlkupplung nach Anspruch 1, **dadurch gekennzeichnet, dass** zumindest einer der Durchsteckbolzen (6) an einem seiner Enden ein unlösbares schaftmutterartiges Schaftelement (8) und an seinem anderen Ende eine lösbare Schaftmutter (9) aufweist.

4. Pfahlkupplung (1) nach Anspruch 3, **dadurch gekennzeichnet, dass** zumindest das am Durchsteckbolzen (6) unlösbar verbundene schaftmutterartige Schaftelement (8) einen zylindrischen, in die Bohrungsleibung (10) eingreifenden Abschnitt mit axial sich erstreckenden, die Bohrungsleibung (10) plastisch verformenden, eine ein Drehmoment aufnehmende Riffelung (11) aufweist.

5. Pfahlkupplung (1) nach einem der Ansprüche 1 bis 4, **dadurch gekennzeichnet, dass** die Durchsteckbolzen (6) parallel zueinander die zu verbindenden Teilelemente (2) durchdringen.

6. Pfahlkupplung (1) nach einem der Ansprüche 1 bis 5, **dadurch gekennzeichnet, dass** die Durchsteckbolzen (6) überkreuzt zueinander die zu verbindenden Teilelemente (2) durchdringen.

7. Pfahlkupplung (1) nach einem der Ansprüche 1 bis 6, **dadurch gekennzeichnet, dass** die Teilelemente (2) im Querschnitt zylindrisch oder vieleckig ausgebildet sind.

8. Pfahlkupplung (1) nach einem der Ansprüche 1 bis 7, **dadurch gekennzeichnet, dass** das Schaftelement einen Gewindebereich seines Innengewindes (8.3) aufweist, welcher länger ist als die durch Übereinanderstecken zweier Teilelemente (2) gebildete Gesamtwandstärke.

9. Pfahlkupplung (1) nach einem der Ansprüche 1 bis 8, **dadurch gekennzeichnet, dass** der Flachkopf (81.) des Schaftelementes (9) einen gewölbten, sich an die Mantelfläche (4) anschmiegenden Kopf (8.5) mit Ausnehmung (12) für einen Steckschlüssel aufweisen.

10. Pfahlkupplung (1) nach einem der Ansprüche 1 bis 9, **dadurch gekennzeichnet, dass** der Flachkopf (8.1) der Schaftelemente (9) als Sechskant (8.6) für einen Sechskantschlüssel ausgebildet ist.

11. Pfahlkupplung (1) nach einem der Ansprüche 1 bis 10, **dadurch gekennzeichnet, dass** das Schaftelement (9) mit seinem Flachkopf (8.1) nur geringer von der Mantelfläche (4) der Teilelemente (2) übersteht als normale Sechskantmuttern.

12. Pfahlkupplung (1) nach einem der Ansprüche 1 bis 11, **dadurch gekennzeichnet, dass** die Teilelemente (2) in ein separates Kupplungsteil beidseitig einsteckbar sind.

13. Pfahlkupplung (1) nach einem der Ansprüche 1 bis 11, **dadurch gekennzeichnet, dass** die Teilelemente (2) an zumindest einem Ende einen vergrößerten Durchmesser derart aufweisen, dass die Teilelemente (2) im Bereich Ihrer Bohrungen (7.1, 7.2) ineinandersteckbar sind.
